# EUROPEAN PATENT APPLICATION

(11) **EP 2 224 322 A1**
(43) Date of publication of application: **01.09.2010**
(21) Application number: 09154012.0
(22) Date of filing: 27.02.2009
(51) Int. Cl.: G06F 3/048

(54) **A mobile wireless communications device to display a cursor based upon a selected keyboard mode and associated methods**

(71) Applicant: RESEARCH IN MOTION LIMITED, Waterloo, Ontario N2L 3W8 (CA)
(72) Inventor: Bos, Jeffrey, Waterloo, Ontario N2L 3WB (CA); Vymenets, Leonid, Waterloo, Ontario N2L 3WB (CA)
(74) Representative: Phillips, Emily Elizabeth

(57) **Abstract**

A mobile wireless communications device includes a housing to carry a wireless transceiver, a display, a keyboard, and a processor cooperating with the wireless transceiver to perform at least one wireless communication function. The processor also cooperates with the display and the keyboard to permit selection of a keyboard mode from among a plurality of different keyboard modes, at least one of the keyboard modes having multiple different letters selectable from a given key. The processor generates a respective different cursor on the display based upon the selected keyboard mode.

## Description

### Technical Field

The present disclosure relates to the field of mobile wireless communications devices and, more particularly, to the display of cursors on mobile wireless communications devices.

### Background

Wireless communications systems continue to grow in popularity and have become an integral part of both personal and business communications. Mobile wireless communications devices allow users to place and receive voice calls most anywhere they travel. Moreover, as technology has increased, so too has the functionality of mobile wireless communications devices and the different types of devices available to users. For example, many mobile wireless communications devices now incorporate personal digital assistant (PDA) features such as calendars, address books, task lists, etc. Moreover, such mobile wireless communications devices may also allow users to wirelessly send and receive electronic mail (e-mail) messages and access the Internet via a cellular network and/or a wireless local area network (WLAN), for example.

As a result, users continue to spend more time using their mobile wireless communications devices during the course of a day for performing tasks such as reading emails, reading web pages, sending short message service (SMS) messages, etc., as opposed to early mobile wireless communications devices that were used only for voice calls.
The use of a mobile wireless communications device for such functions, however, may present certain inconveniences to a user.

For example, a mobile wireless communications device may not have a full keyboard where each letter of the alphabet is assigned to its own key. Indeed, keys on a keyboard of a mobile wireless communications device may have two or more letters assigned thereto. In addition, the mobile wireless communications device may permit selection of different keyboard modes of the keyboard. These different keyboard modes may alter which letters of the alphabet are assigned to each key or how a desired letter to be entered is selected. For example, mobile wireless communications devices utilizing virtual keyboards on touch screen displays may reconfigure their virtual keyboards so that one, two, three, or even four letters are assigned to each virtual key.

Methods of effectively communicating to a user which keyboard mode a mobile wireless communications device is presently in are therefore desirable.

### Brief Description of the Drawings

FIG. 1 is a schematic block diagram of a communications system including a mobile wireless communications device in accordance with an example embodiment of the present disclosure.

FIG. 2 shows the mobile wireless communications device of FIG. 1 in a non-predictive keyboard mode and displaying a cursor based thereupon.

FIG. 3 shows the mobile wireless communications device of FIG. 1 in another non-predictive keyboard mode and displaying a cursor based thereupon.

FIG. 4 shows the mobile wireless communications device of FIG. 1 in a predictive keyboard mode and displaying a cursor based thereupon.

FIG. 5 is a schematic block diagram of a communications system including a mobile wireless communications device in accordance with an example embodiment of the present disclosure.

FIG. 6 shows the mobile wireless communications device of FIG. 5 in a predictive keyboard mode and displaying a cursor based thereupon.

FIG. 7 shows the mobile wireless communications device of FIG. 5 in a number/letter priority keyboard mode and displaying a cursor based thereupon.

FIG. 8 shows the mobile wireless communications device of FIG. 5 in a symbol/letter priority keyboard mode and displaying a cursor based thereupon.

FIG. 9 is a schematic block diagram illustrating components of a mobile wireless communications device in accordance with an example embodiment of the present disclosure.

### Detailed Description

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout, and prime and double prime notation is used to indicate similar elements in alternative example embodiments.

The features and objects of the present disclosure are provided by a mobile wireless communications device that may comprise a housing to carry a wireless transceiver, a display, a keyboard, and a processor. The processor may cooperate with the wireless transceiver to perform at least one wireless communication function. The processor may also cooperate with the display and the keyboard to permit selection of a keyboard mode from among a plurality of different keyboard modes, at least one of the keyboard modes having multiple different letters selectable from a given key. The processor may also generate a respective different cursor on the display based upon the selected keyboard mode.

At least one of the keyboard modes may comprise a predictive text entry mode, a non-predictive text entry mode, a number/letter priority keyboard mode, and/or a symbol/letter priority keyboard mode.

The mobile wireless communications device may further comprise at least one input device carried by the housing and the processor may permit selection of the different keyboard modes based upon at least one of the keyboard and the at least one input device. The mobile wireless communications device may further comprise a device orientation sensor carried by the housing and the processor may permit selection of the different keyboard modes based upon the device orientation sensor.

The cursor may comprise a text cursor. The cursor may additionally or alternatively comprise a pointing cursor.

A method aspect is directed to a method of displaying a cursor on a display of a mobile wireless communications device comprising a keyboard, a processor, and a wireless transceiver cooperating with the processor to perform at least one wireless communication function. The method may comprise permitting selection of a keyboard mode of the keyboard from among a plurality of different keyboard modes. The method may further include generating a respective different cursor on the display based upon the selected keyboard mode.

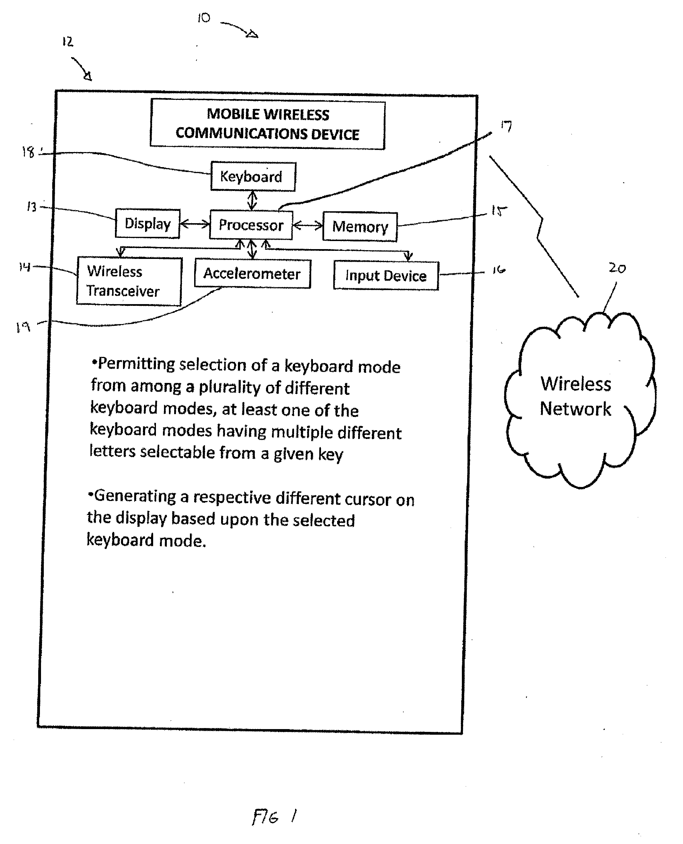

With reference to FIGs. 1-4, a communications system **10** including a mobile wireless communications device **12** according to the present example embodiment is now described. The communications system **10** includes a wireless network **20** that may typically be provided by a cellular telephone network. The mobile wireless communications device **12** comprises a processor **17** coupled to a display 13, a wireless transceiver **14,** a memory **15,** an input device **16**, and a keyboard **18**, The memory may be volatile memory, such as RAM, or non-volatile memory, such as flash RAM or a hard drive. The input device **16** may be one or more keys, a thumbwheel, or a trackball, for example. The input device **16** may also be a microphone or a wireless receiver (e.g. bluetooth), as will be appreciated by those of skill in the art. The keyboard **18** may be a conventional keyboard with a plurality of buttons, or may be a virtual keyboard displayed on a touch sensitive display. Of course, the display **13** may be a touch sensitive screen and portions thereof may therefore serve as the input device **16**.

In addition, the mobile wireless communications device **12** includes a rechargeable battery (not shown), and an orientation sensor **19** (illustratively an accelerometer) to cooperate with the processor **17** to determine a physical orientation of the mobile wireless communication device **12**. The portable housing **21** carries the display **13,** wireless transceiver **14,** memory **15**, input device **16,** processor **17,** keyboard **18,** and accelerometer **19.**

The processor **17** cooperates with the wireless transceiver **14** to perform at least one wireless communication function. For example, the processor **17** may cooperate with the wireless transceiver **14** to place a voice call or to access the Internet.

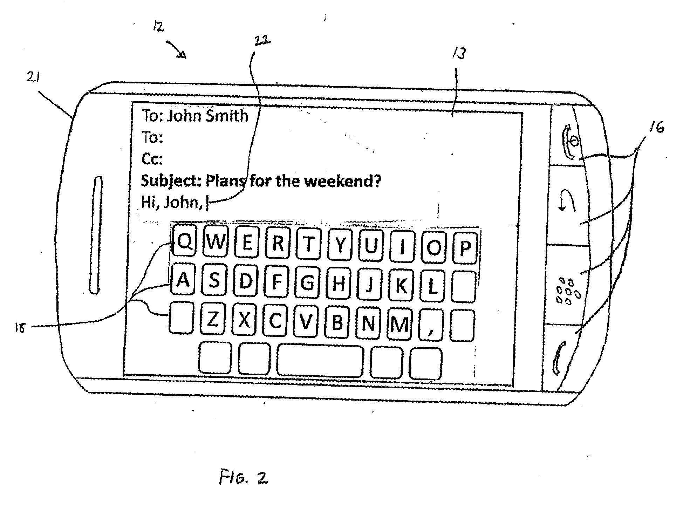

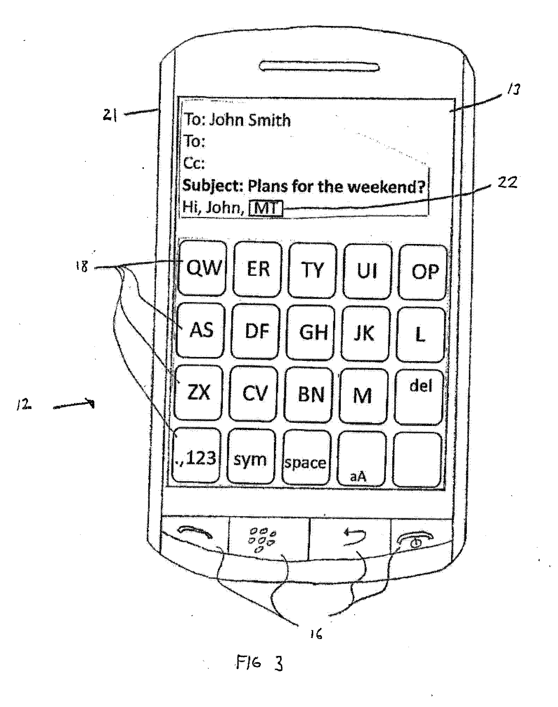

When the accelerometer **19** detects that the mobile wireless communication device **12** is in a landscape orientation, the processor **17** illustratively displays a virtual keyboard **18** having a full set of QWERTY keys, as shown in FIG. 2. When the accelerometer **19** detects that the mobile wireless communication device **12** is in a portrait orientation, the processor **17** illustratively displays a virtual keyboard **18** having multiple different letters selectable from a single key, as shown in FIG. 3. The reason that more than one letter appears on some of the keys is so that less than a full set of QWERTY keys can be used to access all of the English alphabet letters. This advantageously allows the size of the keys displayed, when the mobile wireless communication device **12** is in a portrait orientation, to be of sufficient size to be convenient for users.

The tradeoff with placing multiple different letters on a single key is that typing may become slightly more difficult for users. To make typing easier, the processor 17 permits selection of a keyboard mode from among a plurality of different keyboard modes, at least one of the keyboard modes having multiple different letters selectable from a given key.

The processor **17** may permit selection of a keyboard mode based upon the keyboard **18,** the input device **16**, and/or the accelerometer **19.** For example, the keyboard **18** and/or input device may be used to navigate to a keyboard mode selection menu. Further, movement of the mobile wireless communications device **12,** such as changing the device from a landscape to a portrait orientation (discussed above), as detected by the accelerometer **19,** may be used to select the keyboard mode.

At least one of the keyboard modes may be a non-predictive keyboard mode, called a multi-tap mode. In the multi-tap mode, a user enters a desired letter by pressing a given key a number of times corresponding to the position of the letter on the key. Thus, for example, for a user to enter a "W," he would press the QW key twice.

In addition, at least one of the keyboard modes may be a predictive keyboard mode, which will be discussed below in greater detail. Since the mobile wireless communications device **12** has the plurality of different keyboard modes, one concern is that a user may become confused as to which keyboard mode the device is in.

To address this potential concern and to enhance usability of the mobile wireless communications device **12,** the processor **17** generates a respective different cursor **22** on the display **13** based upon the selected keyboard mode. For example, when the mobile wireless communications device **12** is in a QWERTY keyboard mode (shown in FIG. 2), the processor **17** illustratively generates the cursor **22** as a vertical line "|." This cursor indicates to a user that the mobile wireless communications device **12** is in a standard QWERTY keyboard mode.

When the mobile wireless communications device **12** is in a non-predictive multi-tap keyboard mode having multiple different letters selectable from a given key (as shown in FIG. 3), the processor **17** illustratively generates the cursor as a box with the letters "MT" inside, indicating to a user that the mobile wireless communications device **12** is in a non-predictive multi-tap keyboard mode.

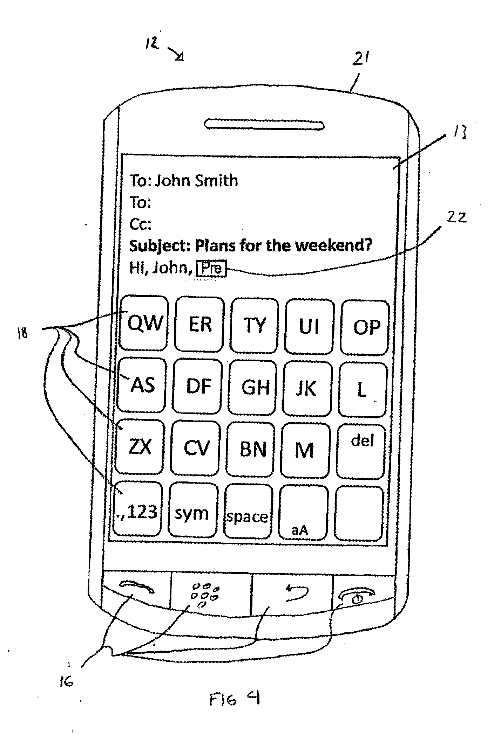

As discussed above, at least one of the keyboard modes is a predictive keyboard mode. When the mobile wireless communications device **1** is in a predictive multi-tap keyboard mode having multiple different letters selectable from a given key (as shown in FIG. 4), the processor **1** illustratively generates the cursor as a box with the letters "Pre" inside, indicating to a user that the mobile wireless communications device **1** is in a predictive multi-tap keyboard mode.

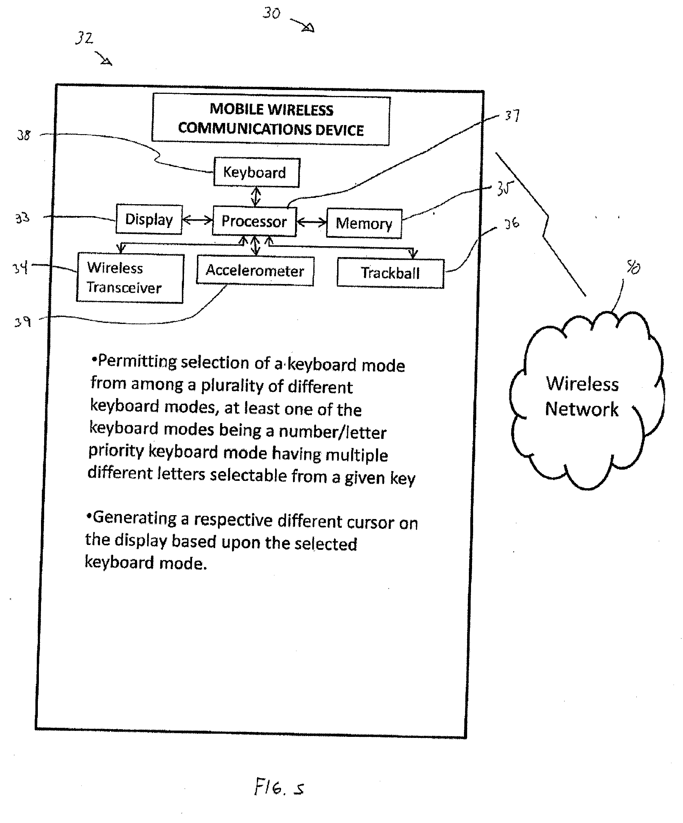

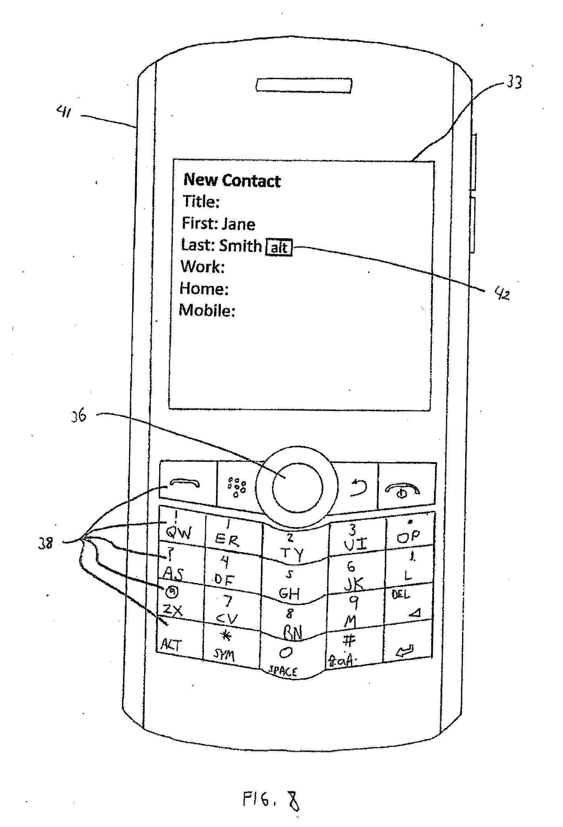

Referring now additionally to FIGs. 5-8, another example embodiment of the mobile wireless communications device **32** is described having a traditional keyboard **38** rather than a virtual keyboard displayed on a touch screen. This mobile wireless communications device **32** includes a housing **41** carrying a processor **37** coupled to a display **33**, wireless transceiver **34,** a memory **35,** a trackball **36,** keyboard **38**, and accelerometer **39.** These components are similar to those of the mobile wireless communications device **12** discussed above. Accordingly, these components require no further discussion.

The keyboard **38** illustratively includes a plurality of multi-symbol keys (shown in FIG.5), each having a plurality of respective letters, numbers, and/or symbols thereon. The keyboard **38** also illustratively includes an alternate function key and a shift key. When the shift key is activated, the next letter entered will be displayed as an uppercase version of that letter. When the alternate function key is activated, the number or symbol appearing on the next key activated will be displayed on the display **13.**

In the predictive keyboard mode, the processor **37** compares respective letters corresponding to actuated multi-letter keys to a list (e.g. dictionary) of words and/or phrases, which is stored in the memory. The processor **37** generates and displays on the display **33** a menu of possible desired words based upon the combination of keys that are pressed, as will be appreciated by those skilled in the art. The possible desired words may be generated according to various rules, such as a general frequency of use of the words, a frequency of use of the words by the user, alphabetically, etc., or a combination thereof.

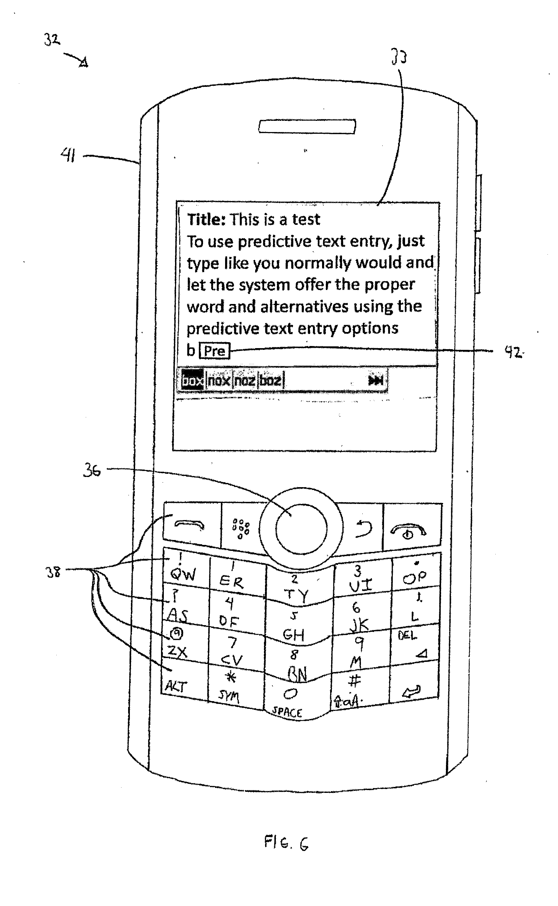

Such a predictive keyboard mode is shown in FIG. 6. The cursor **42** appears a box with the letters "Pre" inside, indicating to a user that the mobile wireless communications device **32** is in a predictive multi-tap keyboard mode. For the current word being typed by the user, the processor **37** displays the text "b," which results in possible word choices of "box," "nox," "noz," and "boz," in the menu. The processor **37** illustratively causes the first word in the menu (e.g. "box") to be initially highlighted. The user may then use the trackball **36** to scroll through other words in the list. The user can select the highlighted word by pressing the trackball **36** inward, or by pressing the return key or space key, for example. Once a desired word is selected, the processor **37** inserts the selected word in the active document (e.g. an e-mail, memo, sms message, web page, etc.), and the process begins again when the user starts entering letters for a next word.

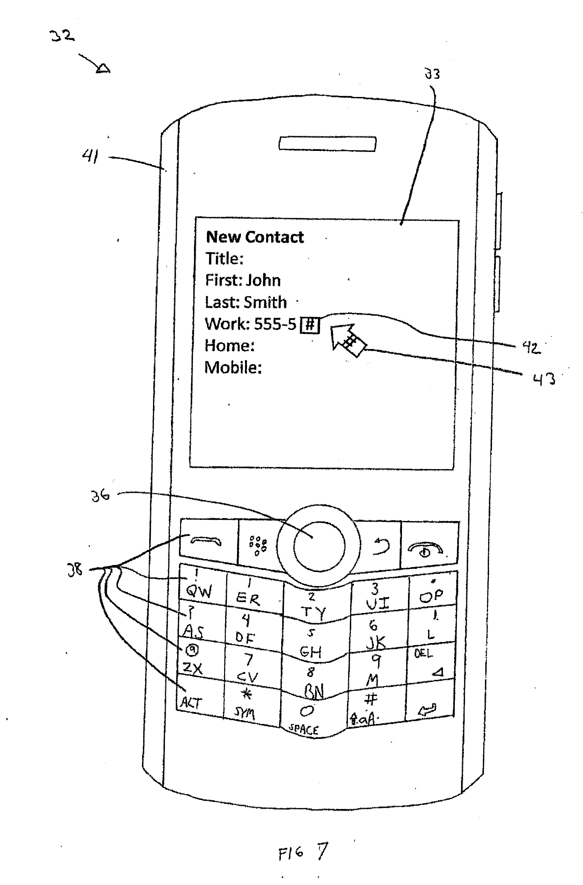

At least one of the keyboard modes may comprise a number/letter priority mode. In this keyboard mode, shown in FIG. 7, actuation of a key having both a number and a letter selectable therefrom will result in the processor **37** displaying the number on the display **33** rather than the letter, with no actuation of the alt key beforehand, contrary to the usual operation of the keyboard **38** (wherein the alt key is actuated prior to a key having both a number and a letter selectable therefrom when display of the number is desired). The cursor **42** appears a box with the number symbol "#" inside, indicating to a user that the mobile wireless communications device **32** is in the number/letter priority keyboard mode.

In addition to the text cursor **42,** a pointing cursor **43** is also illustratively generated by the processor **37** in this keyboard mode. The pointing cursor also displays a number symbol "#" inside to further indicate to a user that the mobile wireless communications device **32** is in the number/letter priority mode. When in the number/letter priority mode, actuation of some or all keys not having numbers selectable therefrom may be ignored.

The pointing cursor **43** may be controlled via the trackball **36** and may be used to select a desired point on the display **33** to advance the text cursor **42** to. The pointing cursor **43** may also be used to select hyperlinks or other functions, as will be appreciated by those of skill in the art.

At least one of the keyboard modes may comprise a symbol/letter priority mode. In this keyboard mode, selected in FIG. 7, actuation of a key having both a symbol and a letter selectable therefrom will result in the symbol being displayed on the screen rather than the letter, with no actuation of the alt key beforehand, contrary to the usual operation of the keyboard **38** (wherein the alt key is actuated prior to a key having both a symbol and a letter selectable therefrom when display of the symbol is desired). The cursor **42** illustratively appears a box with the letters "alt" inside, indicating to a user that the mobile wireless communications device **32** is in the symbol/letter priority keyboard mode.

While the mobile wireless communications device 3 may be placed into the number/letter or symbol/letter priority keyboard modes via a direct selection thereof (choosing a keyboard mode from a menu, for example), the mobile wireless communications device may also be placed into the number/letter or symbol/letter priority keyboard modes based upon a selected data field. For example, when entering data about a new contact into the mobile wireless communications device 32 (shown in FIG. 7), there are multiple data fields to be filled - first name, last name, work telephone number, home telephone number, mobile telephone number, etc. When a data field to be filled with numbers is selected (the work number field, as selected in this example), the mobile wireless communications device **32** is placed into the number/letter priority keyboard mode.

Selection of a different data field may then switch the mobile wireless communications device **32** to a different keyboard mode. Further, positioning of the pointing cursor **43** over a data field may result in the processor dynamically changing the pointing cursor to reflect what keyboard mode the device will be switched to upon selection of that data field.

Those of skill in the art will understand that other suitable keyboard modes may be selectable. For example, a shift keyboard mode and a caps-lock keyboard mode may be selectable and a cursor may be generated based thereupon. In addition, a language mode may be selectable (e.g. English, Spanish, French) and a cursor may be generated based thereupon. That is, a cursor may be generated to reflect which language the mobile wireless communications device **32** is currently using. Further, any suitable keyboard configuration may be used.

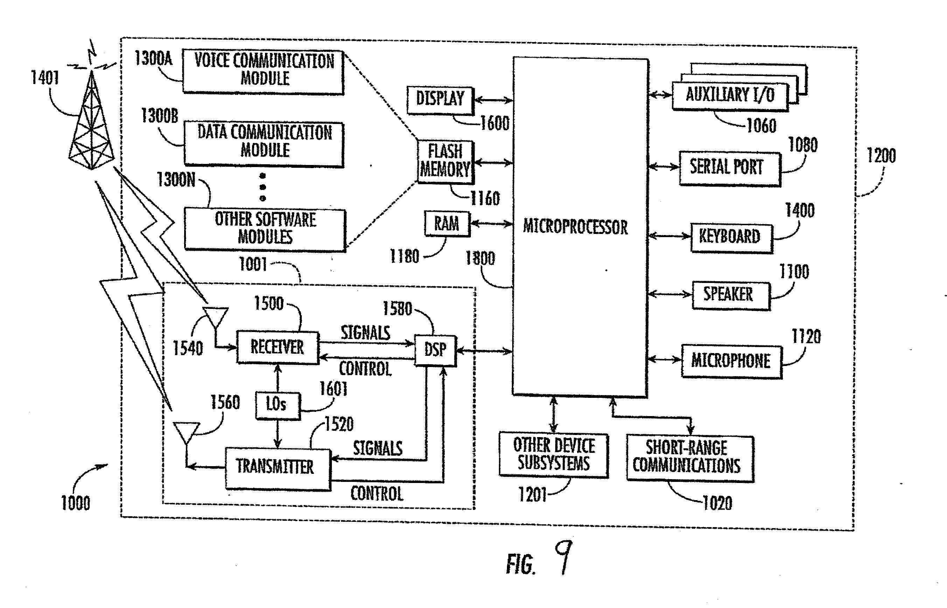

Example components of a hand-held mobile wireless communications device **1000** that may be used in accordance with the present disclosure are further described in the example below with reference to FIG. 9. The device **1000** illustratively includes a housing **1200,** a keypad **1400** and an output device **1600**. The output device shown is a display **1600,** which may comprise a full graphic LCD. In some example embodiments, display **1600** may comprise a touch-sensitive input and output device. Other types of output devices may alternatively be utilized. A processing device **1800** is contained within the housing **1200** and is coupled between the keypad **1400** and the display 1600. The processing device **1800** controls the operation of the display **1600,** as well as the overall operation of the mobile device **1000,** in response to actuation of keys on the keypad **1400** by the user. In some example embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020**; the keypad **1400** and the display **1600,** along with other input/output devices **1060, 1080, 1100** and **1120**; as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device 1000 may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120**. Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other example embodiments of the disclosure will come to the mind of one skilled in the art having the benefit of the teachings presented in the foregoing descriptions and the associated drawings. Therefore, it is understood that the disclosure is not to be limited to the specific example embodiments disclosed, and that modifications and example embodiments are intended to be included within the scope of the appended claims.

## Claims

1. A mobile wireless communications device (12) comprising:
a housing;
a wireless transceiver (14) carried by said housing;
a display (13) carried by said housing;
a keyboard (18)carried by said housing;
a processor (17) carried by said housing and cooperating with said wireless transceiver to perform at least one wireless communication function;
said processor also cooperating with said display and said keyboard to
permit selection of a keyboard mode from among a plurality of different keyboard modes, at least one of the keyboard modes having multiple different letters selectable from a given key, and
generate a respective different cursor (22) on said display based upon the selected keyboard mode.

2. The mobile wireless communications device (12) of Claim 1 wherein at least one of the keyboard modes comprises a predictive text entry mode.

3. The mobile wireless communications device (12) of Claim 1 wherein at least one of the keyboard modes comprises a non-predictive text entry mode.

4. The mobile wireless communications device (12) of Claim 1 wherein at least one of the keyboard modes comprises a number/letter priority keyboard mode.

5. The mobile wireless communications device (12) of Claim 1 wherein at least one of the keyboard modes comprises a symbol/letter priority keyboard mode.

6. The mobile wireless communications device (12) of Claim 1 further comprising at least one input device (16) carried by said housing; and wherein said processor (17) permits selection of the different keyboard modes based upon at least one of said keyboard (18) and said at least one input device.

7. The mobile wireless communications device (12) of Claim 1 further comprising a device orientation sensor (19) carried by said housing; and wherein said processor (17) permits selection of the different keyboard modes based upon said device orientation sensor.

8. The mobile wireless communications device (12) of Claim 1 wherein the cursor (22) comprises a text cursor.

9. The mobile wireless communications device (12) of Claim 1 wherein the cursor (22) comprises a pointing cursor.

10. A method of displaying a cursor (22) on a display of a mobile wireless communications device comprising a keyboard (18), at least one input device (16), a processor (17), and a wireless transceiver (14) cooperating with the processor to perform at least one wireless communication function, the method comprising:
permitting selection of a keyboard mode of the keyboard from among a plurality of different keyboard modes based up at least one of the keyboard and at least one input device; and
generating a respective different cursor on the display based upon the selected keyboard mode.

11. The method of Claim 10 wherein at least one of the keyboard modes comprises a predictive text entry mode.

12. The method of Claim 10 wherein at least one of the keyboard modes comprises a non-predictive text entry mode.

13. The method of Claim 10 wherein at least one of the keyboard modes comprises a number/letter priority keyboard mode.

14. The method of Claim 10 wherein selection of the different keyboard modes is permitted based upon at least one of the keyboard (18) and at least one input device (16).

15. The method of Claim 10 wherein selection of the different keyboard modes is permitted based upon a device orientation sensor (19).

## Amended claims

### Amended claims in accordance with Rule 137(2) EPC.

**1.** A mobile wireless communications device (12) comprising:
a housing;
a wireless transceiver (14) carried by said housing;
a display (13) carried by said housing;
a keyboard (18) carried by said housing;
a processor (17) carried by said housing and cooperating with said wireless transceiver to perform at least one wireless communication function;
said processor also cooperating with said display and said keyboard to
permit selection of a text entry mode from among a predictive text entry mode and a non-predictive text entry mode, and selection of a keyboard mode from among a plurality of different keyboard modes, at least one of the text entry modes and at least one of the keyboard modes having multiple different letters selectable from a given key, and
generate a respective different cursor (22) on said display based upon the selected text entry mode and the selected keyboard mode.

**2.** The mobile wireless communications device (12) of Claim 1 wherein said keyboard (18) comprises at least one key associated with a number and a letter; and wherein at least one of the keyboard modes comprises a number/letter priority keyboard mode in which said at least one key is associated with one of the number and the letter.

**3.** The mobile wireless communications device (12) of Claim 1 wherein said keyboard (18) comprises at least one key associated with a symbol and a letter; and wherein at least one of the keyboard modes comprises a symbol/letter priority keyboard mode in which said at least one key is associated with one of the symbol and the letter.

**4.** The mobile wireless communications device (12) of Claim 1 further comprising at least one input device (16) carried by said housing; and wherein said processor (17) permits selection of the predictive text entry mode, the non-predictive text entry mode, and the different keyboard modes based upon at least one of said keyboard (18) and said at least one input device.

**5.** The mobile wireless communications device (12) of Claim 1 further comprising a device orientation sensor (19) carried by said housing; and wherein said processor (17) permits selection of the predictive text entry mode, the non-predictive text entry mode, and the different keyboard modes based upon said device orientation sensor.

**6.** The mobile wireless communications device (12) of Claim 1 wherein the cursor (22) comprises a text cursor.

**7.** The mobile wireless communications device (12) of Claim 1 wherein the cursor (22) comprises a pointing cursor.

**8.** A method of displaying a cursor (22) on a display of a mobile wireless communications device comprising a keyboard (18), at least one input device (16), a processor (17), and a wireless transceiver (14) cooperating with the processor to perform at least one wireless communication function, the method comprising:
permitting selection of a text entry mode of the keyboard from among a predictive text entry mode and a non-predictive text entry mode, and selection of a keyboard mode of the keyboard from among a plurality of different keyboard modes based up at least one of the keyboard and at least one input device; and
generating a respective different cursor on the display based upon the selected text entry mode and the selected keyboard mode.

**9.** The method of Claim 8 wherein the keyboard (18) comprises at least one key associated with a number and a letter; and wherein at least one of the keyboard modes comprises a number/letter priority keyboard mode in which said at least one key is associated with one of the number and the letter.

**10.** The method of Claim 8 wherein selection of the predictive text entry mode, the non-predictive text entry mode, and the different keyboard modes is permitted based upon a device orientation sensor (19).
